Europäisches Patentamt

European Patent Office

Office européen des brevets

(11) Veröffentlichungsnummer: **0 474 322 A2**

# (12) EUROPÄISCHE PATENTANMELDUNG

(21) Anmeldenummer: **91250057.6**

(22) Anmeldetag: **06.03.91**

(51) Int. Cl.5: **F16F 1/18**

(30) Priorität: **14.03.90 DD 338671**

(43) Veröffentlichungstag der Anmeldung:
**11.03.92 Patentblatt 92/11**

(84) Benannte Vertragsstaaten:
**ES FR GB IT NL**

(71) Anmelder: **FAHRZEUGWERK WERDAU GmbH**
**Greizer Strasse, 70**
**O-9620 Werdau(DE)**

(72) Erfinder: **Friedemann, Stephan, Dipl.-Ing.**
**Mühlstrasse 4**
**O-7113 Markkleeberg(DE)**
Erfinder: **Freund, Wolfgang, Dr.-Ing.**
**Hauptstrasse 118**
**O-9623 Langenbernsdorf(DE)**
Erfinder: **Seifert, Gerd, Dipl.-Ing.**
**Hauptstrasse 101a**
**O-9621 Langenbernsdorf(DE)**
Erfinder: **Knauer, Berthold, Prof. Dr.-Ing.**
**rer.oec.**
**Elsasser Strasse 7**
**O-8019 Dresden(DE)**

(54) **GFK-Blattfeder.**

(57) Die Erfindung betrifft einen einseitig eingespannten Biegefederträger mit Querschnittsverlauf analog Parabel- bzw. Hyperbelfeder zwischen Einspannung und Kraftangriff aus faserverstärktem Kunststoff mit einem großen Anteil von in Trägerlängsrichtung orientiertem Verstärkungsmaterial. Durch gezielte Vorkrümmung des Biegefederträgers wird ein gewünschter Verformungsweg des Kraftangriffspunktes erreicht. Eine Radaufhängung bzw. Achsanlenkung unter Einsatz dieses Biegefederträgers zeichnet sich durch exakte Radführungs- und Spureigenschaften aus. Weiterhin bringt eine Anwendung in der Gerätetechnik als Funktionsintegration zwischen Feder- und Führungselement wesentliche Vorteile.

Fig. 1

EP 0 474 322 A2

Die Erfindung betrifft eine GFK-Blattfeder zur federnden Verbindung von Maschinenelementen bei definiertem Verformungsweg. Ein Einsatz als federndes Rad- oder Achsführungselement im Fahrzeugbau, aber auch als Element zur Realisierung des definierten Feder- und Rückstellweges bzw. definierter Kräfte bei Mechanismen der Gerätetechnik wird als zweckmäßig erachtet.

Mit dem Ziel, vor allem die ungefederten Massen von Fahrzeugen zu verringern, wurden bereits eine Reihe von Kunststoffbauteilen für den Achsbereich von Fahrzeugen realisiert. So ist die Herstellung von faserverstärkten Kunststoffblattfedern nach DE-OS 34 34 375 bekannt. Diese sind aber nicht in der Lage, definierte Verformungswerte zu realisieren und damit Lenkerfunktionen zu erfüllen. Weiterhin ist eine Radaufhängung für Fahrzeuge gemäß DE-OS 35 30 353 bekannt. Sie weist ein federndes Radführungselement auf, das aus einem stehend angeordneten, geschlossenen, trapezförmigen Ring aus Kunststoff besteht, der in Wickeltechnologie hergestellt wird. Die in horizontaler Richtung verlaufenden Seiten erfüllen die Funktion von federnden Achslenkern. Die gewählte aufwendige Wickeltechnologie gestattet in Verbindung mit dem trapezförmigen Ring keine gezielte Vorkrümmung der federnden Achslenker im unbelasteten Zustand und bietet damit nicht die Möglichkeit der Optimierung des Verformungsweges des Kraftangriffspunktes.

Ziel der Erfindung ist es, einen Biegefederträger zu dimensionieren und zu gestalten, der leicht und kostengünstig herstellbar ist und eine Optimierung des Verformungsweges ermöglicht, wobei eine Funktionsintegration zwischen Federung und Anlenkung bzw. Führung und Rückstellung erreicht wird.

Aufgabe der Erfindung ist es, einen definierten Biegefederträger mit nur einem Lenker zu schaffen, dessen optimale Funktionserfüllung ohne zusätzliche technische Mittel erreicht wird.

Erfindungsgemäß wird diese Aufgabe dadurch gelöst, daß der einseitig eingespannte Biegefederträger im unbelasteten Zustand eine Vorkrümmung nach der Funktion y(x) = tx+a sin (bx) aufweist, deren Parameter t, a und b unter Berücksichtigung baulicher Randbedingungen eine Vorausberechnung und gezielte Optimierung des Verformungsverhaltens entsprechend den Anforderungen des Anwenders gestatten. Dabei erfolgt die Parameterfestlegung in Abstimmung mit den gewählten Querschnittsverläufen entsprechend Parabel- oder Hyperbelfeder. Die Möglichkeit der mathematischen Beschreibung der Konturen des Formwerkzeuges gestattet eine ökonomisch günstige Herstellung des Biegefederträgers, durch dessen Anwendung als federnde Achsanlenkung die Anforderungen an eine exakte Radführung kostengünstig realisierbar sind.

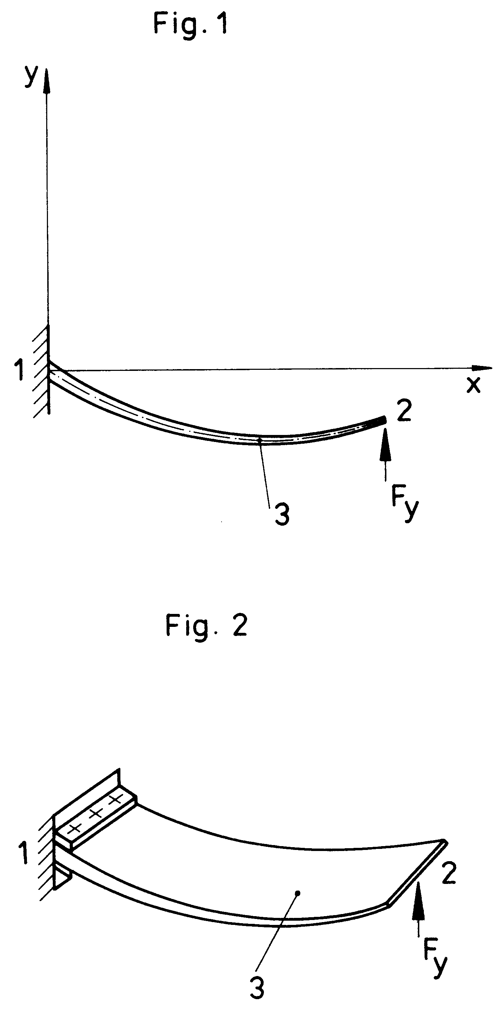

Mit Fig. 2 soll ein Ausführungsbeispiel erläutert werden. Es wird ein Biegefederträger 3 mit parabolischem Dickenverlauf zwischen Einspannung 1 und Kraftangriffspunkt 2 aus Faserverbundwerkstoff gezeigt. Beim dargestellten Beispiel wurde durch die Wahl der entsprechenden Parameter a; b; t in der Gleichung über dem Federweg y eine Minimierung der Veränderung des Kraftangriffspunktes 2 in horizontaler Richtung (Δx) erreicht. Dies wird mittels Kompensation der horizontalen Verlängerung infolge Drehung um die Einspannung 1 durch ein Zusammendrücken des Biegefederträgers 3 in x-Richtung realisiert.

Die mathematische Modellierung der Form des Biegefederträgers 3 ist mit Fig. 1 erläuterbar.

Bei der mathematischen Beschreibung des Biegefederträgers 3 wird mit der Funktion

$$y(x) = tx + a \sin (bx)$$

die neutrale Faser dargestellt.

Dabei erfolgt mit dem Parameter t eine Fixierung des Kraftangriffspunktes 2 zur Einspannung 1 entsprechend den baulichen Randbedingungen. Der Parameter b gestattet eine Gestaltung des Trägers als Sinusvoll- oder Sinushalbwelle. In Abstimmung mit den baulichen Restriktionen läßt sich durch den Parameter a die Größe der Vorkrümmung und damit unter Berücksichtigung der Lage des Kraftangriffspunktes 2 zur Einspannung 1 der gewünschte Verformungsweg in x- und y-Richtung bestimmen und durch Berechnung überprüfen. Durch das Vorliegen des Dicken- bzw. Breitenverlaufes, entsprchend Parabel- oder Hyperbelfeder, sind die Koordinaten des Formwerkzeuges für jeden beliebigen Punkt mathematisch beschreibbar.

Bezugszeichen und technische Begriffsabstimmungen

Nachstehende Aufstellung enthält die Bezugszeichen und technischen Begriffsbestimmungen der vorstehend näher bezeichneten Erfindung "GFK-Blattfeder".

1    Einspannung
2    Kraftangriffspunkt
3    Biegefederträger
x    Richtung
y    Richtung
t    Parameter
b    Parameter
a    Parameter

**Patentansprüche**

1.   GFK-Blattfeder zur federnden Verbindung von Maschinenelementen bei definiertem Verformungsweg, gekennzeichnet, daß der Biegefederträger (3) eine Vorkrümmung im unbelasteten Zustand nach der Funktion $y(x) = tx + a \sin(bx)$ aufweist, deren freie Parameter unter Berücksichtigung der baulichen Randbedingungen und in Abstimmung mit dem Querschnittsverlauf zwischen Einspannung (1) und Kraftangriffspunkt (2) entsprechend Parabel- bzw. Hyperbelfeder eine Vorausberechnung und Optimierung des Verformungsweges gestatten.

2. GFK-Blattfeder nach Anspruch 1, gekennzeichnet, daß der Faserverbundwerkstoff zum größeren Teil Verstärkungsmaterial in Längsrichtung des Biegefederträgers (3) aufweist.

3. GFK-Blattfeder nach Anspruch 2, gekennzeichnet, daß die Gestaltung der Außenkonturen des Biegefederträgers (3) mathematisch beschrieben ist.

## Fig. 1

## Fig. 2